# FASCICULE DE BREVET EUROPEEN

(11) **EP 2 445 838 B1**
(45) Date de publication et mention de la délivrance du brevet: **15.05.2019**
(21) Numéro de dépôt: 10734288.3
(22) Date de dépôt: 21.06.2010
(51) Int. Cl.: C01F 17/00, B01J 13/00, B82Y 30/00

(54) **PROCEDE DE PREPARATION DE NANOPARTICULES A BASE DE FLUORURE DE TERRE RARE**
VERFAHREN ZUR HERSTELLUNG VON SELTENERDFLUORIDNANOPARTIKELN
METHOD FOR PREPARING RARE EARTH FLUORIDE NANOPARTICLES

(30) Priorité: 23.06.2009 FR 0954263
(43) Date de publication de la demande: 02.05.2012
(73) Titulaire: Université Claude Bernard Lyon I, 69625 Villeurbanne Cedex (FR); Centre National de la Recherche Scientifique, 75794 Paris Cedex 16 (FR)
(72) Inventeur: CHAPUT, Frédéric, F-69100 Villeurbanne (FR); DESROCHES, Cédric, F-69006 Lyon (FR); PAROLA, Stéphane, F-69330 Jonage (FR)
(74) Mandataire: Sarlin, Laure V.
(86) Numéro de dépôt international: PCT/FR2010/051254
(87) Numéro de publication internationale: WO 2010/149918

(56) Documents cités:
- JP-A- 1 028 203
- FUJIHARA S ET AL: "Formation of LaF3 microcrystals in sol-gel silica" JOURNAL OF NON-CRYSTALLINE SOLIDS, NORTH-HOLLAND PHYSICS PUBLISHING. AMSTERDAM, NL, vol. 244, no. 2-3, 2 mars 1999 (1999-03-02), pages 267-274, XP004166727 ISSN: 0022-3093
- FUJIHARA S ET AL: "Influence of solution composition on the formation of SiO2/LaF3 composites in the sol-gel process" JOURNAL OF MATERIALS SCIENCE, vol. 35, no. 11, 2000, pages 2763-2767, XP2573381 DOI: 10.1023/A:1004726630820
- COMBELAS P, COSTES M AND GARRIGOU-LAGRANGE C: "Protonation du N,N-diméthylformamide: étude par spectrométries vibrationelle et électronique" CANADIAN JOURNAL OF CHEMISTRY, vol. 53, 1975, pages 442-447, XP002573487 DOI: 10.1139/v75-061 cité dans la demande
- EIDEN-ASSMANN S ET AL: "CeF3 nanoparticles: synthesis and characterization" MATERIALS RESEARCH BULLETIN, ELSEVIER, KIDLINGTON, GB, vol. 39, no. 1, 3 janvier 2004 (2004-01-03), pages 21-24, XP004480288 ISSN: 0025-5408
- DIMAIO J R ET AL: "Structural determination of light-emitting inorganic nanoparticles with complex core/shell architectures" ADVANCED MATERIALS 20071019 WILEY-VCH VERLAG DE, vol. 19, no. 20, 19 octobre 2007 (2007-10-19), pages 3266-3270, XP002573382 DOI: 10.1002/adma.200602109 cité dans la demande

## Description

La présente invention concerne le domaine technique de la préparation de fluorures de terre rare, notamment sous la forme de nanoparticules.

Les fluorures de terre rare trouvent de nombreuses applications, notamment dans le domaine médical, par exemple en thérapie X pour le traitement du cancer, ou encore en imagerie cellulaire, par IRM ou fluorescence. De tels composés sont également intéressants en optique ou en luminescence, notamment pour la fabrication de scintillateurs, d'émetteur de champ ou de composés nanophosphorescents. L'optoélectronique et les pigments sont d'autres domaines d'applications. Dans les applications citées, le plus souvent les fluorures de terre rare sont utilisés sous la forme de nanoparticules. Les procédés classiques de préparation de nanoparticules de fluorure de terre rare sont, le plus souvent, difficiles à mettre en oeuvre et posent des difficultés en termes de transposition à l'échelle industrielle.

A titre d'exemple de procédés connus, on peut citer :
- la méthode décrite dans Lezhnina et al., Adv. Func. Mat. 2006, vol. 16, n°7, pp. 935-942 qui met en oeuvre une réaction sous pression à chaud (180°C en autoclave) entre Ln(NO₃)₃ et NH₄F,
- la méthode en microémulsion décrite par exemple dans la publication M. Ritcey et al., Chem. Mater. 2005, vol. 17, pp. 3040-3043 qui nécessite la manipulation de grandes quantités de solvant et dont la purification peut être rendue difficile par la présence des surfactants utilisés,
- la décomposition de trifluoroacétates de terres rares sous argon à chaud (300 °C) décrite par Yan et al., Chem. Eur. J. 2007, vol. 13, n°8, pp. 2320-2332, qui outre le fait de demander des conditions de synthèse dures est limitée à la préparation de nanoparticules présentant un caractère hydrophobe,
- la réaction de sels de lanthanides avec du fluorure de sodium en solution aqueuse en présence de dioctadécyldithiophosphate (TDP) telle que décrit par Van Veggel et al., Nanoletter 2002, vol. 2, n°7, pp. 733-737 ou Ballato et al., Adv. Mater. 2007, vol. 19, pp. 3266-3270, qui conduit à des nanoparticules de fluorures simples, de structure trigonale, dont la surface est rendue hydrophobe par le dithiophosphate. La mise en oeuvre de TDP toxiques peut être problématique,
- la méthode mettant en oeuvre le trichlorure de terre rare, NH₄F dans le méthanol, décrite par Zhen et al., Nanotechnology, 2007, vol. 18, n°46, pp. 465606.1-465606.6 qui dans le cas de fluorures simples est limitée à ceux présentant une structure trigonale.

Ces différents procédés conduisent soit à des composés de pureté non satisfaisante, soit à des nanoobjets de faible cristallinité. En outre, certains de ces procédés mettent en oeuvre des conditions de température et de pression contraignantes, et/ou sont adaptées à un nombre limités de compositions chimiques.

Dans la publication de Fujihara et al. dans Journal of Non-Crystalline Solids, 1999, 244, 267-274, les auteurs décrivent la préparation de nanoparticules de LaF₃ en matrice vitreuse élaborée par procédé sol-gel. Pour cela, deux solutions sont préparées. La première est composée d'un mélange de tétraméthoxysilane (TMOS) et de DMF (solution1). La DMF est utilisée ici comme agent de contrôle du séchage du gel (pour le garder monolithique) et non comme réactif intervenant dans la synthèse des nanoparticules de fluorure. L'autre solution (solution2) est composée d'acétate de lanthane, d'acide trifluoroacétique, d'acide nitrique (en quantité catalytique) et d'eau. Dans cette dernière solution, les anions associés aux acides réagissent directement avec les ions La³⁺ en absence de DMF qui est présente uniquement dans la solution 1. Lors du mélange des solutions précédentes, un complexe à transfert de charge pourrait se faire avec l'acide nitrique (ici en quantité catalytique) et la DMF. Les complexes à transfert de charge ont été mis en évidence uniquement avec les acides minéraux et non avec les acides organiques. Même si, ce qui est très peu probable, un complexe à transfert de charge se formait entre la DMF et l'acide trifluoroacétique, en aucun moment du procédé décrit dans ce document, il ne se formerait des nanoparticules de fluorure de lanthane en solution, mais seulement du trifluoroacétate de lanthane qui resterait dissous dans le mélange réactionnel, sans précipitation. D'ailleurs, les mêmes auteurs ont constaté que le trifluoroacétate de lanthane se forme déjà dans la solution 2 sans DMF (méthode II dans Fujihara et al., Journal of Material Sciences, 2000, 25, 2763-2767). Ces publications ne proposent donc pas la synthèse de nanoparticules de fluorure de terres rares en solution. Dans ces deux publications, la synthèse des nanoparticules de LaF₃ intervient après séchage du gel de silice dopé (obtenu par hydrolyse-condensation du TMOS en présence de La³⁺ et de l'acide trifluoroacétique) et traitement thermique à une température supérieure à 300°C des xérogels de silice dopés. A cette température l'acide trifluoroacétique se décompose en libérant des ions F⁻ qui se combinent alors avec les ions La³⁺ pour former les cristallites de LaF₃. Ces cristallites restent piégées dans la matrice vitreuse. Ces documents ne décrivent donc nullement un procédé de préparation de nanoparticules de fluorures de terre rare en solution.

Dans ce contexte, la présente invention se propose de fournir un nouveau procédé de préparation de fluorures de terres rares qui soit facile à mettre en oeuvre et peu coûteux. Ce procédé vise la préparation d'une suspension colloïdale de nanoparticules de fluorures de terre rare, voire de nanoparticules en un autre matériau présentant un enrobage de fluorures de terres rare.

Le procédé selon l'invention se doit aussi de permettre un contrôle des compositions chimiques obtenues et une maîtrise de la pureté des composés préparés, ainsi que de la cristallinité.

Dans ce contexte, l'invention concerne un procédé de préparation d'une suspension colloïdale de nanoparticules composées, au moins en partie, d'un fluorure de terre rare caractérisé en ce que ledit fluorure est obtenu, par réaction en solution, entre d'un sel de la terre rare correspondante et un complexe de transfert de charge de formule (I) : 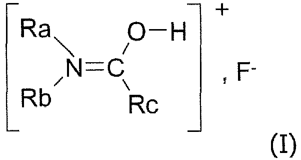 avec :
- Ra et Rb, identiques ou différents, qui représentent, chacun indépendamment l'un de l'autre, un groupe (C₁-C₆)alkyle, (C₃-C₇)cycloalkyle, phényle, hétérocycloalkyle de 5 ou 6 chainons, le dit groupe pouvant éventuellement être substitué, ou bien Ra et Rb sont liés entre eux et forment une chaine alkylène, comprenant de 2 à 6 atomes de carbone, éventuellement substituée, et
- Rc qui représente un atome d'hydrogène ou un groupe (C₁-C₆)alkyle, (C₃-C₇)cycloalkyle, phényle, hétérocycloalkyle de 5 ou 6 chainons, le dit groupe pouvant éventuellement être substitué, ou bien Rb et Rc sont liés entre eux et forment une chaine alkylène, comprenant de 2 à 5 atomes de carbone, éventuellement substituée.

De manière classique, on entend :
Par (C₁-C₆)alkyle, un groupe hydrocarboné saturé, linéaire ou ramifié, comprenant de 1 à 6 atomes de carbone, tels que les groupes méthyle, éthyle, iso-propyle, n-propyle, sec-butyle, tert-butyle, n-butyle, n-pentyle, n-hexyle.

Par chaine alkylène, comprenant de 2 à 6 atomes de carbone, on entend une chaine -(CH₂)ₚ- avec p = 2, 3, 4, 5 ou 6.

Par (C₃-C₇)cycloalkyle, on entend un groupe hydrocarboné saturé cyclique, comprenant de 3 à 7 atomes de carbone.

Par hétérocycloalkyle, on entend un groupe cycloalkyle tel que défini ci-dessus dans lequel l'un au moins des atomes de carbones a été remplacé par un hétéroatome, du type N ou S, et notamment un groupe pyrrolidine ou pipéridine.

Dans le cas où un des groupes (C₁-C₆)alkyle, (C₃-C₇)cycloalkyle, ou phényle, sera substitué, il pourra être substitué par un ou plusieurs substituants, notamment choisis parmi les halogènes (F, Cl, Br, I), les groupes (C₁-C₆)alkyle, phényle, hydroxy (-OH), (C₁-C₆)alkylhydroxy (-(C₁-C₆)alkylOH). Néanmoins, de préférence, ces groupes seront non substitués, leur préparation étant plus aisée dans ce cas.

Bien entendu, dans le complexe de transfert de charge de formule (I), lorsque Ra et Rb seront liés entre eux pour former une chaine alkylène, Rc représentera un atome d'hydrogène ou un groupe (C₁-C₆)alkyle, (C₃-C₇)cycloalkyle, phényle, hétérocycloalkyle de 5 ou 6 chainons, éventuellement substitué et Rc ne pourra pas être lié à Rb.

De même, lorsque Rb et Rc seront liés entre eux pour former une chaine alkylène, Ra représentera, un groupe (C₁-C₆)alkyle, (C₃-C₇)cycloalkyle phényle, hétérocycloalkyle à 5 ou 6 chainons, éventuellement substitué, et Ra ne pourra pas être lié à Rb.

Le procédé selon l'invention a l'avantage de pouvoir utiliser des sels de terre rare commercialement accessibles et peu couteux. Dans le procédé selon l'invention, on fait réagir une solution d'un complexe à transfert de charge de formule (I) préalablement formé avec un sel de la terre rare. L'anion du complexe à transfert de charges (F⁻) va réagir, en solution, avec les ions de la terre rare sélectionnée du type Ln³⁺ avec Ln=terre rare. Comme détaillé ci-après, la réaction peut être menée dans des solvants entièrement recyclables et dans des conditions douces de température et de pression. Le procédé selon l'invention utilise la chimie colloïdale, le fluorure de terre rare formé se présentant sous la forme de nanoparticules ou venant se former en surface de nanoparticules d'une autre nature chimique, et qui peuvent notamment être déjà présentes dans le milieu réactionnel. Par « nanoparticules », on entend des particules de taille nanométrique. Dans le cadre de l'invention, les nanoparticules obtenues peuvent être sphériques ou non sphériques et, notamment, présenter une forme ovale ou légèrement allongée, par exemple du type aiguille ou bâtonnets. On pourra parler plus généralement de « nanoobjets ». La plus grande dimension des nanoparticules, qui correspond à leur diamètre dans le cas de nanoparticules sphériques, sera de préférence comprise entre 1 et 500 nm et, préférentiellement, entre 10 et 100 nm, cette dimension étant par exemple mesurée par diffusion dynamique de la lumière, par microscopie de proximité, ou de préférence par microscopie électronique en transmission. Compte tenu de leur procédé d'élaboration, la taille des nanoparticules obtenues sera relativement homogène. Les nanoparticules obtenues sont avantageusement monodisperses, c'est-à-dire qu'elles présentent une distribution de taille (correspondant à la plus grande dimension ou au diamètre dans le cas de particules sphériques) très étroite autour d'une valeur moyenne et notamment, au moins 50% des nanoparticules ont leur taille qui correspond à la taille moyenne ± 0,5 nm, déterminée par microscopie électronique à transmission sous forme d'un histogramme de tailles.

Dans le cadre du procédé selon l'invention, la réaction entre le sel de terre rare et le complexe de transfert de charge est, de préférence, réalisée dans un solvant ou un mélange de solvant, dans lequel le sel de terre rare utilisé est soluble. Le sel de terre rare utilisé est, par exemple, choisi parmi les chlorures, nitrates et alkoxydes et le solvant sera choisi en fonction du sel utilisé. La terre rare, quant à elle, peut notamment être choisie parmi le lanthane, le cérium, le praséodyme, le néodyme, le prométhium, le samarium, l'europium, le gadolinium, le terbium, le dysprosium, l'holmium, l'erbium, le thulium, l'ytterbium, le lutécium, l'yttrium et le scandium.

Le solvant ou un des solvants du mélange utilisé pour la réaction entre le sel de terre rare et le complexe de transfert de charge peut correspondre au solvant utilisé pour préparer le complexe de transfert de charge.

Le complexe de transfert de charge est préparé préalablement à sa mise en réaction avec le sel de terre rare. Sa préparation est donc réalisée, en l'absence de sel de terre rare. Par exemple, le complexe de transfert de charge peut être obtenu par réaction de HF et de diméthylformamide, conduisant à la formation d'un complexe de transfert de charge dans lequel Ra=Rb=méthyle et Rc=H. Le complexe de transfert de charge peut également être obtenu par réaction de HF et de diméthylacétamide, conduisant à la formation d'un complexe de transfert de charge dans lequel Ra=Rb=Rc=méthyle. Selon une autre alternative, le complexe de transfert de charge peut être obtenu par réaction de HF et de N-méthylpyrrolidinone, conduisant à la formation d'un complexe de transfert de charge dans lequel Ra= méthyle et -Rc-Rb-=-(CH₂)₃-. La préparation du complexe de transfert de charge pourra être effectuée, notamment à température ambiante et sous pression atmosphérique, et ce en l'absence de solvant additionnel, le diméthylformamide, le diméthylacétamide ou la N-méthylpyrrolidinone jouant le rôle à la fois de réactif et de solvant. De préférence, par la suite, le diméthylformamide, le diméthylacétamide ou la N-méthylpyrrolidinone joue également le rôle de solvant pour la réaction entre le sel de terre rare et le complexe de transfert de charge. Une partie du solvant sert à stabiliser la suspension colloïdale qui va être obtenue, par effet de complexation à la surface des nanoparticules. De façon avantageuse, la réaction entre le sel de terre rare et le complexe de transfert de charge est réalisée dans un mélange de solvant contenant également un solvant protique, tel que le méthanol, l'éthanol ou l'isopropanol.

Dans le cas où Ra et Rb sont liés, les composés ci-dessous sont d'autres exemples de composés pouvant être utilisés pour la formation du complexe de transfert de charge :

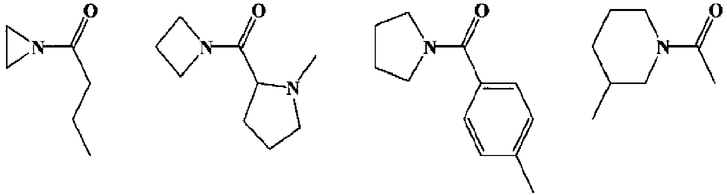

Dans le cas où Rb et Rc sont liés, les composés ci-dessous sont d'autres exemples de composés pouvant être utilisés pour la formation du complexe de transfert de charge:

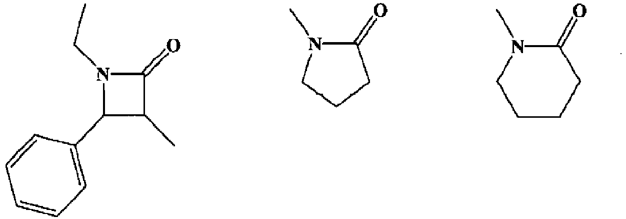

Une réaction entre une solution du sel de terre rare sélectionné et une solution du complexe de transfert de charge préalablement formé peut être menée, par exemple en utilisant une solution du sel de terre rare dans un solvant tel que l'amide ayant servi à la synthèse du complexe de transfert de charge, un solvant protique comme le méthanol, l'éthanol ou l'isopropanol ou un mélange amide/solvant protique, et une solution du complexe de transfert de charge préalablement formé dans l'amide ayant servi à sa synthèse. A titre d'exemple de mise en oeuvre du procédé selon l'invention, le fluorure de terre rare est formé par réaction d'une solution du sel de terre rare dans le méthanol, avec une solution du complexe de transfert de charge préalablement formé, à une température, de préférence, comprise entre 20 et 200 °C, et, préférentiellement entre 70 et 170°C. La température choisie, qui le plus souvent nécessitera un chauffage, pourra être supérieure au point d'ébullition du ou des solvants utilisé(s). Le chauffage sera maintenu, de préférence entre 1min et 48h et, préférentiellement, entre 5min et 12h. Comme mis en évidence dans les exemples 3 et 4 ci-après, la température et le temps de chauffage influencent la cristallinité. Plus la température et/ou le temps de chauffage est (sont) important(s), plus le fluorure de terre rare obtenu va présenter un degré de cristallinité élevé. Il est également possible de réaliser la réaction entre le sel de terre rare et le complexe de transfert de charge, sous un traitement aux micro-ondes avec, de préférence, une température maximale de 200°C, une pression maximale de 20 bars et une puissance maximale de 300 Watts.

Aucune condition de pression, ni d'atmosphère n'est requise pour mener la réaction entre le sel de terre rare et le complexe de transfert de charge, pas plus que pour la préparation du complexe de transfert de charge. Notamment, l'une et/ou l'autre des réactions peuvent être réalisées à pression atmosphérique et à l'air. Il peut néanmoins être avantageux de réaliser la réaction entre le sel de terre rare et le complexe de transfert de charge sous pression. Dans un tel cas d'une réaction solvothermale, la solution est, par exemple, introduite dans un autoclave et la température est augmentée. La pression est généralement la pression autogène qui peut être augmentée par un gaz neutre. De préférence, la température maximale est de 200°C et la pression maximale de 100 bars. Dans les deux variantes de mise en oeuvre utilisant un traitement aux micro-ondes ou solvothermal, l'objectif est d'abaisser les temps de traitement et d'améliorer la cristallinité du fluorure de terre rare formé.

En fonction des réactifs et composés présents dans le milieu, les nanoparticules obtenues peuvent être composées exclusivement, majoritairement, ou seulement en partie de fluorure de terre rare. Par fluorure de terre rare, on entend un fluorure de terre rare de formule LnF₃, avec Ln qui représente une terre rare ou encore un fluorure mixte ou un fluorure dopé. Un fluorure mixte est un fluorure d'une terre rare et d'au moins un autre élément qui peut être une autre terre rare ou un autre élément, par exemple du type métal alcalin ou alcalino-terreux. A titre d'exemples de fluorure mixte, on peut citer NaLnF₄ avec Ln qui représente une terre rare. Un fluorure dopé est un fluorure de terre rare dont une partie des cations a été substituée par une ou plusieurs autres terres rares (en générale 1 à 5% atomique). Pour l'obtention d'un fluorure mixte de terre rare ou d'un fluorure dopé, différents sels seront utilisés : des sels de l'élément terre rare et du ou des autres éléments. Les autres sels seront également, de préférence, solubles dans le mélange réactionnel, et en particulier dans le solvant ou mélange de solvants utilisés. Ces sels seront, seront, par exemple, choisis parmi les chlorures, nitrates et alkoxydes. Il sera également possible d'utiliser un co-solvant permettant d'aider la solubilisation des autres sels utilisés. On pourra, notamment, ajouter de la diméthylformamide, qui permet par exemple de solubiliser plus facilement les sels de sodium du type nitrates.

Lorsqu'aucune particule ou nanoparticule préexistante n'est présente dans le mélange réactionnel, en début de synthèse, le fluorure de terre rare formé est obtenu sous la forme de nanoparticules, c'est-à-dire que les nanoparticules obtenues sont composées exclusivement, de fluorure de terre rare. Le fluorure de terre rare peut ensuite être fonctionnalisé, avec des molécules organiques, tel que l'acide caprylique, selon des méthodes bien connues de l'homme de l'art. La fonctionnalisation consiste à greffer à la surface des nanoparticules une molécule présentant une structure du type A-*Sp*-*F* dans laquelle :
- *A* est une fonction assurant l'accrochage de la molécule à la surface
- *Sp* est un groupe espaceur
- *F* une fonction chimique permettant de modifier le caractère des nanoparticules (propriété de dispersion, hydrophobie, hydrophilie...etc.).

Comme groupe A, une fonction complexante des cations de surface des nanoparticules pourra par exemple être utilisée (phosphate, phosphonate, carboxylate, dithiophosphate, dithiophosphonate...). La force de complexation de ce groupement pourra être renforcée par l'utilisation de fonctions multiples (polyacide, polyphosphate...etc.).

Comme espaceur *Sp*, on pourra utiliser n'importe quel espaceur connu de l'homme de l'art, par exemple une chaîne alkyl linéaire ou branchée ou un groupe aromatique ou une combinaison de ces groupes, pouvant être interrompus par un ou plusieurs hétéro atomes choisis parmi O, N, S, P.

Comme fonction chimique *F*, on pourra utiliser n'importe quelle fonction chimique connue de l'homme de l'art. Des exemples de telles fonctions et des guides sont données dans la demande de brevet internationale WO 2008/139100 « Method for preparing a colloidal zirconia solution ».

Par exemple, une fonctionnalisation de la surface du fluorure de terre rare obtenu peut être réalisée avec une molécule organique porteuse d'une fonction biphosphonate.

En réalisant la réaction entre le sel de terre rare et le complexe de transfert de charge, en présence de particules ou de nanoparticules déjà existantes, la formation du fluorure de terre rare aura lieu sous la forme d'une couche venant recouvrir la surface de particules ou nanoparticules existantes présentes dans le milieu réactionnel. Il est alors possible d'obtenir une grande diversité de nanoparticules. Le coeur correspondant aux particules existantes présentes dans le milieu réactionnel, en début de synthèse, peut, par exemple être composé d'un oxyde (silice, alumine, zircone...), d'un métal (or, platine, palladium...), d'un chalcogénure... Ces assemblages peuvent garder les propriétés initiales du fluorure ou posséder des propriétés nouvelles. L'enrobage pourra, ensuite, être également fonctionnalisé, comme détaillé précédemment.

Il apparaît donc que le procédé selon l'invention présente de nombreux avantages : il peut être mené à basse température, sans condition particulière d'atmosphère, par exemple à l'air. Il offre une grande maitrise, en termes de composition, pureté, cristallinité des composés obtenus. Il est compatible avec une modification chimique de l'état de surface des nanoparticules ou de l'enrobage obtenu. Le procédé est compatible avec l'utilisation de solvants non-toxiques et recyclables. Pour toutes ces raisons, auxquelles s'ajoutent une facilité et une rapidité de mise en ouvre, le procédé selon l'invention est facilement transposable à l'échelle industrielle.

Selon un autre de ses aspects, l'invention concerne un xérogel obtenu par déstabilisation d'une suspension colloïdale de nanoparticules composées, au moins en partie, d'un fluorure de terre rare et obtenue avec le procédé selon l'invention, notamment avec de l'acétone, et séchage du précipité résultant.. Dans le cas de nanoparticules composées exclusivement de fluorure de terre rare, le xérogel obtenu pourra se présenter sous la forme d'un matériau transparent qui offrira une alternative aux monocristaux du fluorure de terre rare en question, le plus souvent difficile à faire.

Les exemples ci-après, en référence aux Figures annexées, permettent d'illustrer l'invention, mais n'ont aucun caractère limitatif.
La **Figure 1** présente les diagrammes de diffraction des Rayons X (CuKα) de nanoparticules de fluorure d'ytterbium synthétisées dans différents solvants réactifs.
La **Figure 2** présente les diagrammes de diffraction des Rayons X (CuKα) de nanoparticules de fluorure d'ytterbium et de lutétium synthétisées dans la NMP à haute température.
La **Figure 3** est une photographie en microscopie électronique à transmission qui montre des nanoparticules de fluorure d'ytterbium obtenues dans la NMP à haute température.
La **Figure 4** montre les diagrammes de diffraction des Rayons X (CuKα) de nanoparticules de fluorure d'ytterbium synthétisées dans la DMF à 70°C pour différents temps de traitement thermique.
La **Figure 5** est une photographie en microscopie électronique à transmission qui montre des nanoparticules de fluorure d'ytterbium obtenues dans la DMF à 70°C (10h).
La **Figure 6** montre les diagrammes de diffraction des Rayons X (CuKα) de nanoparticules de fluorure d'ytterbium synthétisées dans la NMP à haute température pour différents temps de traitement thermique.
La **Figure 7** montre les diagrammes de diffraction des Rayons X (CuKα) de nanoparticules de fluorure de terres rares (structure hexagonale) synthétisées dans la DMF à 70°C.
La **Figure 8** montre les diagrammes de diffraction des Rayons X (CuKα) de nanoparticules de fluorures de terres rares (structure orthorhombique) synthétisées dans la DMF à 70°C.
La **Figure 9** présente le diagramme de diffraction des Rayons X (CuKα) de nanoparticules de fluorure mixte d'ytterbium et de sodium synthétisées dans la DMF à 70°C.
La **Figure 10** présente le diagramme de diffraction des Rayons X (CuKα) de nanoparticules de fluorure mixte Yb_{0,8}La_{0,15}Tb_{0,05}F₃ synthétisées dans la NMP à haute température.
La **Figure 11** présente le spectre infrarouge de nanoparticules de YbF₃ dont la surface est modifiée par l'acide caprylique.
La **Figure 12** est une représentation schématique de nanoparticules de YbF₃ obtenues selon le procédé de l'invention et modifiées par de l'acide caprylique.

### Exemple 1 : Synthèse de nanoparticules de fluorure d'ytterbium en utilisant les différents solvants « réactifs » suivants :

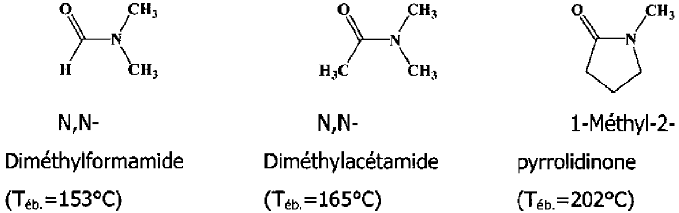

La source de fluor est l'acide fluorhydrique : HF (40%, d=1,13, MW=20,01).

Lors du barbotage de HF gazeux dans une solution de N,N-diméthylformamide, il y a trois bouleversement dans le spectre infrarouge qui montrent la formation de cations amidium : 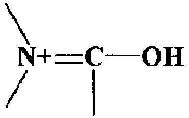
- Dans la zone centrée autour de 3000cm⁻¹, il y a apparition d'une large bande attribuée au vibration d'élongation des groupements -OH.
- Dans la zone centrée autour de 1650cm⁻¹, il y a apparition d'une bande étroite attribuée aux vibrations d'élongation des groupements C=N⁺ (DMF protonée). Parallèlement la bande de vibration du groupement C=O de l'amide disparaît progressivement.
- Dans la zone centrée autour de 670cm⁻¹, il y a apparition d'une bande à 679cm⁻¹ révélatrice de la formation d'un complexe intermédiaire qui conduit à la DMF protonée. Parallèlement la bande à 660cm⁻¹ attribuée aux vibrations des groupements O=C-N de la DMF non protonée disparaît.

La formation du complexe de transfert de charge est également mis en évidence de la même manière, dans le cas de la N-Diméthylacétamide et de la 1-Méthyl-2-pyrrolidinone. Ces données sont en accord avec la littérature (Protonation du N,N-diméthylformamide: étude par spectrométries vibrationnelle et électronique, P. Combelas, M. Costes et C. Garrigou-Lagrange, Can. J. Chem. 53, 442 (1975)) qui avait déjà mis en évidence la formation de tels complexes.

La source d'ytterbium est YbCl₃.6H₂O (MW=387,49).

0,45g d'acide fluorhydrique (soit 0,009 mole de HF ; 0,4mL) est prélevé dans un pot en téflon et mélangé à 16mL de solvant. Le mélange qui s'échauffe très légèrement est versé dans un ballon.

Sous agitation, est ensuite, lentement, versée une solution contenant un sel de lanthanide : 1,55g de YbCl₃.6H₂O (4.10⁻³ mole) + 3 mL de MeOH.

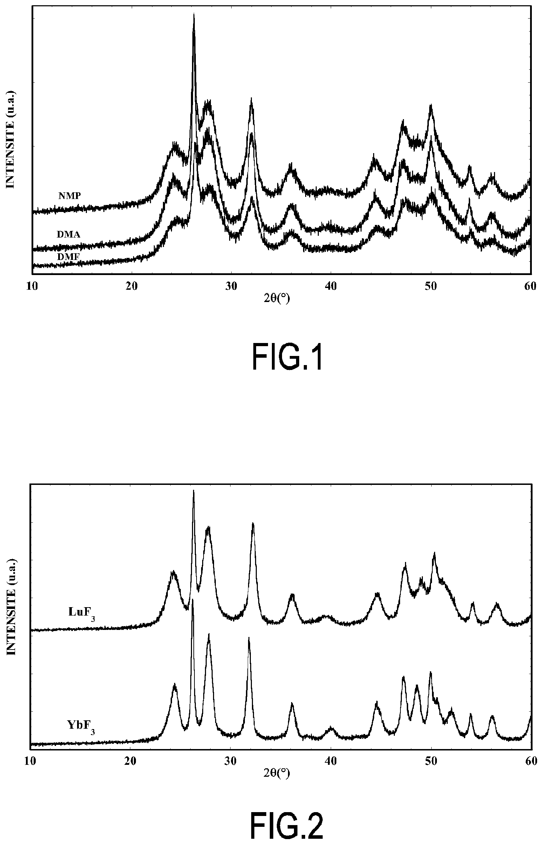

A la fin de l'addition la solution est transparente ; la température est alors montée progressivement à 70°C. Après une période de chauffe de l'ordre de 15 heures, les solutions sont devenues opalescentes et correspondent à des solutions colloïdales. L'introduction d'une partie de ces solutions dans l'acétone entraîne la précipitation des nanoparticules. Après isolement par centrifugation et séchage des précipités, les poudres de nanoparticules sont analysées par diffraction des rayons X. Les diagrammes de diffraction des Rayons X (CuKα) des nanoparticules de fluorure d'ytterbium synthétisées dans les différents solvants réactifs sont présentés **Figure 1****.** Leur indexation a été faite en utilisant la fiche JCPDS 32-1418 (YbF₃ orthorhombique). L'élargissement des raies de diffraction provient de l'extension finie des domaines de diffraction cohérents et de l'existence de micro-déformations du réseau liées à la présence de défauts.

### Exemple 2 : Synthèse de nanoparticules de fluorure d'ytterbium et de lutétium en utilisant la l-méthyl-2-pyrrolidinone comme solvant à haute température (T>70°C).

On procède comme à l'exemple 1, en utilisant la 1-méthyl-2-pyrrolidinone (NMP) comme solvant. Après préparation du mélange final par addition de la solution de chlorure d'ytterbium ou de lutétium la température est montée progressivement jusqu'à ce que le solvant soit porté à reflux. La température du mélange est alors stabilisée à 107°C. Après 5 minutes de chauffage la solution devient opalescente, le chauffage est maintenu pendant 16 heures. Les digrammes de diffraction des poudres de nanoparticules obtenues sont présentés **Figure 2****.** Ils ont été indexés en utilisant la fiche JCPDS 32-1418 (YbF₃ de structure orthorhombique) et la fiche JCPDS 32-0612 (LuF₃ de structure orthorhombique).

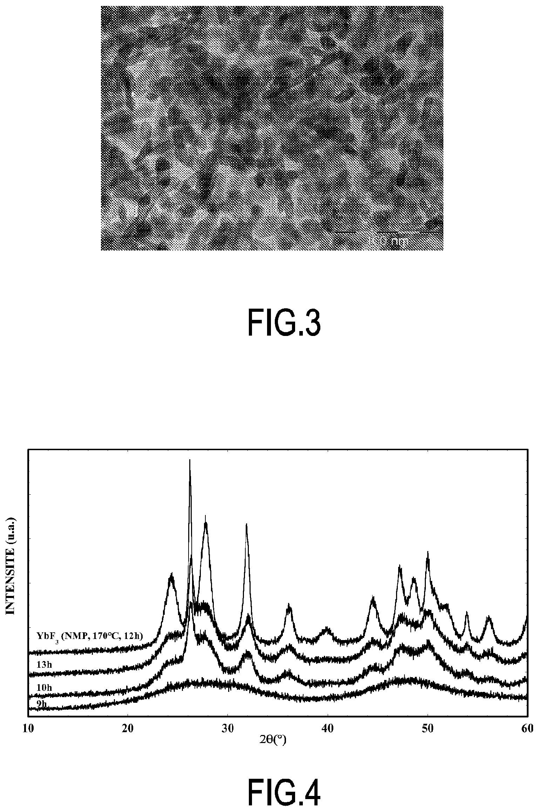

Les observations en microscopie électronique à transmission (photographie présenté **Figure 3**) montrent une taille de particules comprise entre 10 et 20nm pour YbF₃.

### Exemple 3 : Synthèse de nanoparticules de fluorure d'ytterbium en utilisant la N,N-diméthylformamide à 70°C avec différents temps de chauffe.

On procède comme à l'exemple 1 en utilisant la N,N-diméthylformamide (DMF) comme solvant. Après préparation du mélange final, la température est montée progressivement jusqu'à 70°C. La température étant maintenue constante, des échantillons sont prélevés régulièrement et analysés par diffraction des rayons X et par diffusion de la lumière. Le **Tableau 1** donne l'évolution de la taille des particules en fonction du temps de traitement. La **Figure 4** met en évidence la modification des diagrammes de diffraction des rayons X pour différents temps de traitement. Pour comparaison, le diagramme de diffraction de nanoparticules de YbF₃ synthétisées dans la NMP à haute température a été reporté sur la même figure. En dessous de 10h de traitement à 70°C, les nanoparticules ne sont pas cristallisées.

**Tableau 1: Evolution avec le temps de traitement à 70°C du diamètre hydrodynamique et de l'état de cristallinité pour des nanoparticules de fluorure d'ytterbium.**

| Temps de traitement (h) | Diamètre hydrodynamique (nm) | Etat de cristallinité |
|---|---|---|
| 7 | 4 | Amorphe |
| 8,5 | 38 | Amorphe |
| 9 | 50 | Amorphe |
| 10 | 90 | Cristallisé |
| 13 | 122 | Cristallisé |

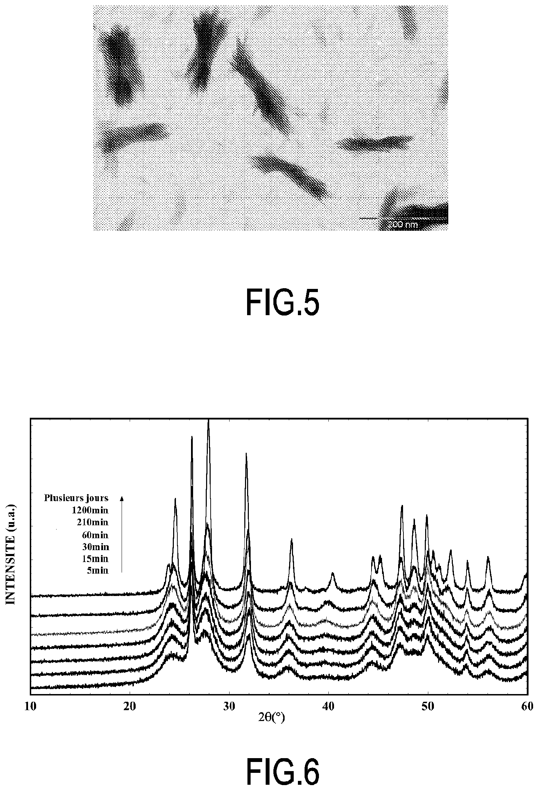

La **Figure 5** présente une photographie prise en microscopie électronique en transmission qui montre la morphologie des particules après 10h de traitement du milieu réactionnel. Les particules sont constituées d'aiguilles primaires nanométriques qui s'agrègent en fagots.

### Exemple 4 : Synthèse de nanoparticules de fluorure d'ytterbium en utilisant la 1-méthyl-2-pyrrolidinone comme solvant à 170°C avec différents temps de chauffe.

On procède comme à l'exemple 2 en utilisant la 1-méthyl-2-pyrrolidinone (NMP) comme solvant. Après préparation du mélange final la température du bain est montée progressivement jusqu'à 170°C (la température du mélange réactionnel est fixée par la température d'ébullition du mélange de solvants). La température étant maintenue constante, des échantillons sont prélevés régulièrement et analysés par diffraction des rayons X. La **Figure 6** met en évidence la modification des diagrammes de diffraction des rayons X pour différents temps de traitement.

### Exemple 5 : Synthèse de nanoparticules de fluorure de terres rares (Y, La, Ce, Pr, Nd, Sm, Eu, Gd, Tb, Dy, Ho, Er, Tm, Yb et Lu) dans la N,N-diméthylformamide à 70°C.

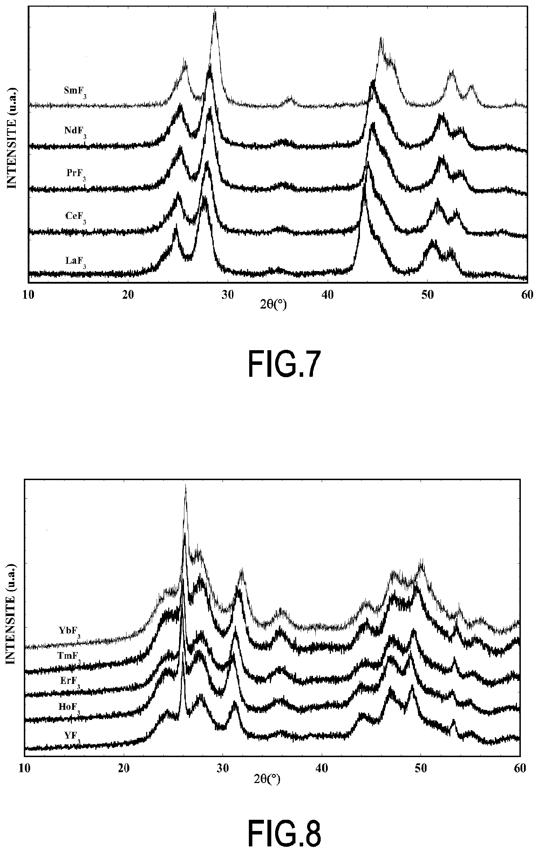

On procède comme à l'exemple 1 en utilisant la N,N-diméthylformamide (DMF) comme solvant principal. Après préparation du mélange final par ajout de la solution méthanolique du chlorure hydraté de la terre rare choisie, la température est montée progressivement jusqu'à 70°C. La température est maintenue constante pendant plusieurs heures jusqu'à ce que la solution devienne opalescente. Les poudres de nanoparticules isolées après purification sont analysées par diffraction des rayons X. Les **Figures 7** et **8** montrent les diagrammes de diffraction des rayons X pour différents fluorures de terres rares.

### Exemple 6 : Synthèse de nanoparticules de fluorures mixtes (NaYbF₄, Yb_{0,8}La_{0,15}Tb_{0,05}F₃).

### a) Synthèse de nanoparticules de fluorure d'ytterbium et de sodium en utilisant la DMF comme solvant.

La source de fluor est l'acide fluorhydrique : HF (40%, d=1,13, MW=20,01).

La source d'ytterbium est Yb(NO₃)₃.5H₂O (MW=449,13).

La source de sodium est NaNO₃ (MW=84,99).

La composition de la solution d'acide fluorhydrique est donnée ci-dessous :
0,62g de HF 40%
22 mL de DMF anhydre

Le mélange s'échauffe très légèrement.

Le mélange total est mis dans un ballon auquel il est additionné, sous forte agitation, la solution suivante :
1,852g de Yb(NO₃)₃.5H₂O
0,35g de NaNO₃
6 mL de MeOH + 4mL de DMF

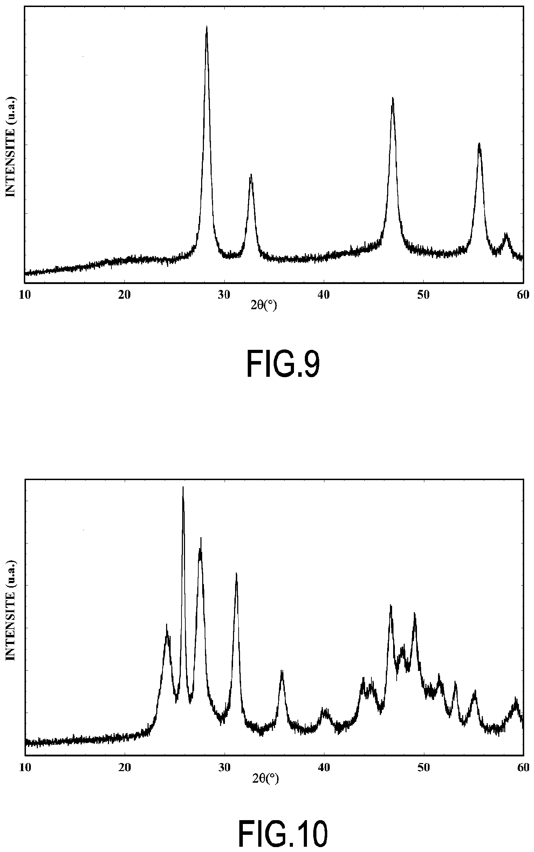

A la fin de l'addition la solution est transparente et la température est montée à 70°C. Après 45 minutes d'agitation, une solution colloïdale est obtenue. Le chauffage est maintenu plusieurs dizaines d'heures. La poudre de nanoparticules purifiée est analysée par diffraction des rayons X. Le diagramme de diffraction, présenté **Figure 9****,** montre que la phase cubique NaYF₄ est synthétisée (fiche JCPDS 77-2043).

b) Pour Yb_{0,8}La_{0,15}Tb_{0,05}F₃ on procède comme dans l'exemple 2 en utilisant la NMP comme solvant principal. Après préparation du mélange final par ajout de la solution méthanolique de sels de terres rares dans les proportions choisies, la température du bain de chauffage est montée progressivement jusqu'à 170°C. La température est maintenue constante pendant 16 heures, la solution est devenue opalescente. La poudre de nanoparticules purifiée est analysée par diffraction des rayons X. Le diagramme de diffraction, présenté **Figure 10****,** montre que la phase orthorhombique Yb_{0,8}La_{0,15}Tb_{0,05}F₃ est obtenue.

### Exemple 7 : Modification par l'acide caprylique de la surface de nanoparticules de fluorures d'ytterbium préparées dans la NMP à haute température.

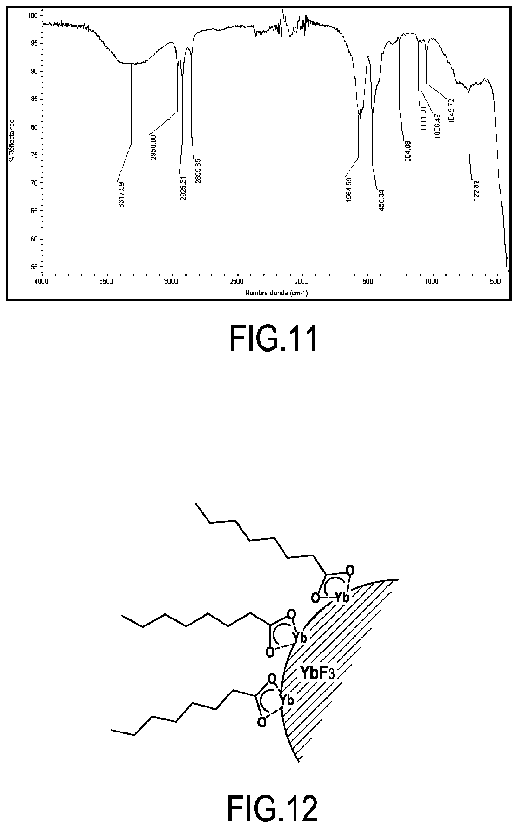

On procède à la synthèse de nanoparticules de YbF₃ par un procédé comparable à celui décrit à l'exemple 2. Les nanoparticules sont purifiées par précipitations et centrifugations successives. Elles sont dispersées à l'aide d'un sonificateur dans l'acide caprylique en large excès. La suspension obtenue est portée à 150°C pendant une douzaine d'heures. La centrifugation du mélange obtenu après refroidissement donne un précipité qui se disperse mal dans le chloroforme. La suspension est déstabilisée par ajout dans l'éthanol. Ce cycle est répété plusieurs fois jusqu'à obtenir une solution colloïdale transparente dans le chloroforme. La taille des particules mesurée par diffusion de la lumière est centrée autour de 50nm. La **Figure 11** montre le spectre infrarouge de la poudre de nanoparticules ainsi préparée. Les deux bandes à 1458 et 1565 cm⁻¹ sont attribuées aux vibrations d'élongation symétrique et antisymétrique des groupements carboxylates présents et représentés **Figure 12****.** Ceci constitue une preuve de la présence des molécules organiques à la surface des particules. La fonctionnalisation avec l'acide oléique a également été réalisée.

### Exemple 8 : Fonctionnalisation avec un trialkoxysilane de la surface de nanoparticules de fluorures d'ytterbium préparées dans la NMP à haute température.

On procède à la synthèse de nanoparticules de YbF₃ par un procédé comparable à celui décrit à l'exemple 2. Les nanoparticules sont purifiées par précipitations et centrifugations successives. Elles sont dispersées sans difficulté à l'aide d'un sonificateur dans un volume d'eau déionisée de sorte que l'on obtienne une concentration en nanoparticules de 10g/L. Le colloïde préparé est alors introduit sous forte agitation dans le même volume d'une solution diluée de silicate de tétraméthylammonium (3% en masse de silice). Le mélange qui en résulte est limpide (légèrement opalescent) et son pH est autour de 11. Après 24h de réaction à température ambiante, la solution est purifiée par dialyse pour éliminer certaines espèces présentes indésirables (ions divers, silicates en excès...). Au final la solution obtenue présente un pH de l'ordre de 7. Il est ramené à 9 par ajout d'hydroxyde de tétrabutylammonium pour assurer une meilleure stabilité des nanoparticules silicatées (augmentation du potentiel zêta en valeur absolue) et préparer l'étape suivante. Dans cette dernière, on introduit goutte à goutte la solution aqueuse de nanoparticules silicatées dans une solution éthanolique d'alkoxysilane (le rapport molaire alkoxysilane/YbF₃ est de l'ordre de 5) portée à reflux. Après plusieurs heures de réaction, les nanoparticules enrobées sont purifiées et dispersées dans un solvant qui dépend de l'alkoxysilane greffé. Dans cet exemple, les nanoparticules sont dispersées aisément dans l'éthanol après fonctionnalisation avec le méthacryloxypropyltriméthoxysilane.

### Exemple 9 : Préparation d'un xérogel à base de nanoparticules de fluorures d'ytterbium synthétisées dans la DMF.

On procède à la synthèse de nanoparticules de YbF₃ par un procédé comparable à celui décrit à l'exemple 1. La solution colloïdale obtenue est déstabilisée en présence d'acétone. La centrifugation à 6000tr/min pendant 10min de la suspension résultante conduit à un gel de nanoparticules parfaitement transparent. Un séchage à 50°C pendant 1h du gel, donne un xérogel de fluorure d'ytterbium. Cette approche permet la préparation de matériaux inorganiques transparents.

### Exemple 10 : Synthèse de nanoparticules de fluorure d'ytterbium en utilisant la 1-méthyl-2-pyrrolidinone comme solvant et un chauffage microonde du milieu réactionnel.

On procède comme à l'exemple 2 en utilisant la 1-méthyl-2-pyrrolidinone (NMP) comme solvant. Le mélange final est introduit dans un réacteur fermé et l'ensemble est disposé dans un four micro-ondes CEM (Discover). La température de consigne et le temps de maintien à cette température sont respectivement fixés à 110°C et 5 minutes. Durant le traitement, la pression à l'intérieur du réacteur s'élève légèrement. Après ce traitement, une solution colloïdale est obtenue. Les nanoparticules sont purifiées par précipitations et centrifugations successives. Le diagramme de diffraction de la poudre de nanoparticules obtenue a été indexé en utilisant la fiche JCPDS 32-1418 (YbF₃ de structure orthorhombique). Le diagramme est comparable à celui représenté **Figure 2****.** Cet exemple montre clairement les avantages d'un traitement micro-ondes pour la synthèse de fluorures de lanthanide.

### Exemple 11 : Modification de la surface de nanoparticules de fluorures d'ytterbium préparées dans la NMP à haute température par l'acide 1,1-bisphosphonic 1-hydroxy-3,6,9,12,15,18,21-heptaoxa-docosylidène (BP1) :

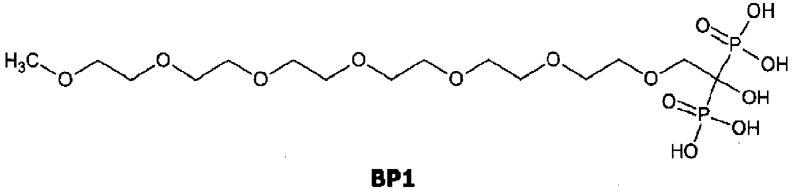

Des nanoparticules de YbF₃ telles qu'obtenues à l'exemple 2 sont dispersées à l'aide d'un sonificateur dans de l'eau déionisée. La concentration en ytterbium dans la solution colloïdale est de 0,33 mole/L. A cette solution, du biphosphonate pégylé (BP1) préalablement dissous dans un volume équivalent d'eau déionisée est additionné (le rapport molaire Yb/BP1=2). Le mélange limpide obtenu est porté à 70°C pendant une heure. L'excès de biphosphonate est éliminé par dialyse (contre de l'eau déionisée) ou par filtration tangentielle (eau déionisée). Les nanoparticules pégylées sont isolées par lyophilisation. En plus des bandes caractéristiques de la chaîne PEG, le spectre infrarouge de la poudre de nanoparticules de YbF₃ pégylées montre que les bandes caractéristiques des groupements P-OH de BP1 ont disparu au profit d'une bande intense (autour de 1100 cm⁻¹) caractérisant la formation de liaisons Yb-O-P. Le lyophilisat peut être facilement dispersé dans de l'eau déionisée avec l'assistance d'ultrasons.

### Exemple 12 : Modification de la surface de nanoparticules de fluorures d'ytterbium préparées dans la NMP à haute température par l'acide 1,1-bisphosphonic 1-hydroxy-3,7,11,15-tetraméthyl(hexadécylidène) :

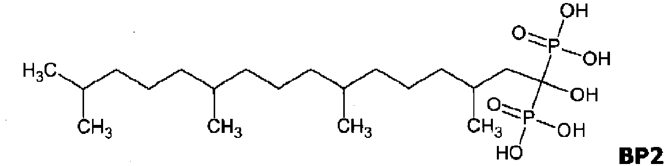

Des nanoparticules de YbF₃ telles qu'obtenues à l'exemple 2 sont dispersées à l'aide d'un sonificateur dans l'eau déionisée. La concentration en ytterbium dans la solution colloïdale est 0,33 mole/L. A cette solution du biphosphonate à chaîne grasse (BP2) préalablement dissous dans un volume équivalent de toluène est additionné sous forte agitation I (le rapport molaire Yb/BP2=2). Rapidement, une émulsion est formée. Après une heure d'agitation, l'émulsion est cassée par ajout de méthanol et les nanoparticules qui précipitent sont isolées et purifiées par centrifugation (l'excès de biphosphonate est également éliminé). En plus des bandes caractéristiques de la chaîne organique, le spectre infrarouge de la poudre de nanoparticules séchée de YbF₃ fonctionnalisé montre que les bandes caractéristiques des groupements P-OH de BP2 ont disparu au profit d'une bande intense (autour de 1100 cm⁻¹) caractérisant la formation de liaisons Yb-O-P. La poudre de nanoparticules peut être très facilement dispersé dans l'hexane.

### Exemple 13 : Modification de la surface de nanoparticules de fluorures de gadolinium préparées dans la NMP à haute température par l'acide 1,1-bisphosphonic 1-hydroxy-3,6,9,12,15,18,21-heptaoxa-docosylidène :

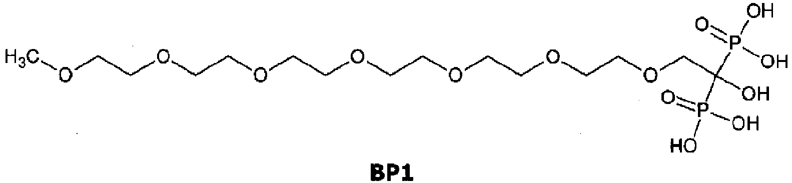

La synthèse de nanoparticules de GdF₃ pégylé est réalisée selon un procédé comparable à celui décrit à l'exemple 11. Les nanoparticules pégylées isolées par lyophilisation sont dispersées dans du sérum physiologique (0,9 % NaCl) avec l'assistance d'ultrasons. La concentration en gadolinium mesurée par ICP (Inductively coupled plasma) est 0,1 mole/L. Le rapport molaire Gd/P a été également évalué par ICP. Il est égal à 12, soit 24 Gd par chaîne PEG. La taille des particules nues (sans chaîne PEG) mesurées en DLS est comprise entre 10 et 20nm, ce diamètre hydrodynamique passe à 75nm environ lorsque les particules sont habillées avec les chaînes PEG. Des observations en microscopie électronique en transmission ont montré que les nanocristaux sont de forme sphérique. La stabilité des solutions colloïdales dans l'eau et en solution saline a été étudiée par des mesures de potentiel zêta et de taille en fonction du pH. Cette stabilité est vérifiée pour une large gamme de pH allant de 5 à 14 et donc couvrant la valeur du pH du sang in vivo. Ces nanoparticules pégylées peuvent servir d'agent de contraste en IRM.

Dans le but d'optimiser la réponse magnétique du système précédent des nanoparticules de GdF₃ fonctionnalisées avec du Gd-DOTA ont été préparées en utilisant la même approche :

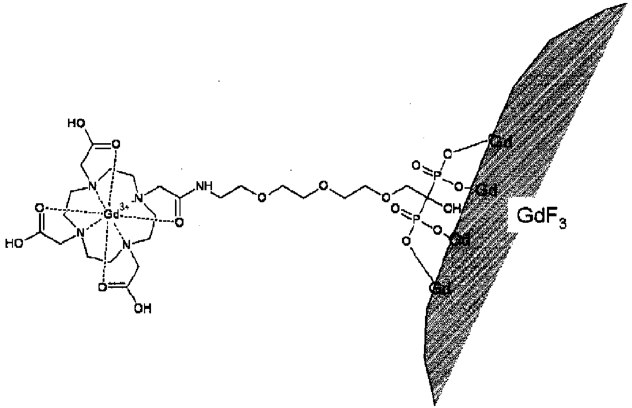

### Exemple 14 : Modification de la surface de nanoparticules de fluorures d'ytterbium préparées dans la NMP à haute température par un biphosphonate comportant une fonction polymérisable :

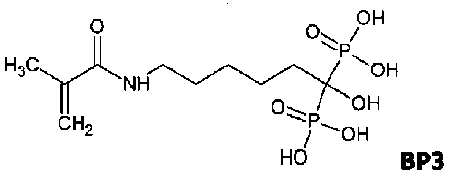

On procède à la synthèse de nanoparticules de YbF₃ modifiées avec des molécules BP3 comportant une fonction polymérisable par un procédé comparable à celui décrit à l'exemple 11. Les nanoparticules ainsi synthétisées peuvent être incorporées dans un polymère préparé à partir de monomères comportant des fonctions polymérisables proches de celles de BP3.

## Revendications

1. Procédé de préparation d'une suspension colloïdale de nanoparticules composées, au moins en partie, d'un fluorure de terre rare **caractérisé en ce que** ledit fluorure est obtenu, par réaction en solution, entre un sel de la terre rare correspondante et un complexe de transfert de charge de formule (I) : 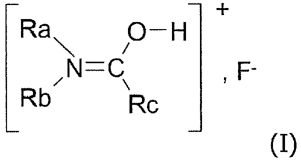 dans laquelle :
- Ra et Rb, identiques ou différents, représentent, chacun indépendamment l'un de l'autre, un groupe (C₁-C₆)alkyle, (C₃-C₇)cycloalkyle, phényle, hétérocycloalkyle de 5 ou 6 chainons, le dit groupe pouvant éventuellement être substitué, ou bien Ra et Rb sont liés entre eux et forment une chaine alkylène, comprenant de 2 à 6 atomes de carbone, éventuellement substituée, et
- Rc représente un atome d'hydrogène ou un groupe (C₁-C₆)alkyle, (C₃-C₇)cycloalkyle, phényle, hétérocycloalkyle de 5 ou 6 chainons, le dit groupe pouvant éventuellement être substitué, ou bien Rb et Rc sont liés entre eux et forment une chaine alkylène, comprenant de 2 à 5 atomes de carbone, éventuellement substituée.

2. Procédé selon la revendication 1 **caractérisé en ce que** la réaction entre le sel de terre rare et le complexe de transfert de charge est réalisée dans un solvant ou un mélange de solvant, dans lequel le sel de terre rare utilisé est soluble.

3. Procédé selon la revendication 1 ou 2 **caractérisé en ce que** le complexe de transfert de charge est préalablement obtenu par réaction de HF et de diméthylformamide, conduisant à la formation d'un complexe de transfert de charge dans lequel Ra=Rb=méthyle et Rc=H.

4. Procédé selon la revendication 1 ou 2 **caractérisé en ce que** le complexe de transfert de charge est préalablement obtenu par réaction de HF et de diméthylacétamide, conduisant à la formation d'un complexe de transfert de charge dans lequel Ra=Rb=Rc=méthyle.

5. Procédé selon la revendication 1 ou 2 **caractérisé en ce que** le complexe de transfert de charge est préalablement obtenu par réaction de HF et de N-méthylpyrrolidinone, conduisant à la formation d'un complexe de transfert de charge dans lequel Ra= méthyle et -Rc-Rb-=-(CH₂)₃-.

6. Procédé selon l'une des revendications précédentes **caractérisé en ce que** la réaction entre le sel de terre rare et le complexe de transfert de charge est réalisée dans un mélange de solvant contenant un solvant protique.

7. Procédé selon la revendication 6 **caractérisé en ce que** le solvant protique est le méthanol, l'éthanol ou l'isopropanol.

8. Procédé selon l'une des revendications précédentes **caractérisé en ce que** le complexe de transfert de charge est préalablement formé à partir d'une solution de HF et de diméthylformamide, diméthylacétamide ou N-méthylpyrrolidinone et **en ce que** le diméthylformamide, le diméthylacétamide ou la N-méthylpyrrolidinone joue également le rôle de solvant pour la réaction ultérieure entre le sel de terre rare et le complexe de transfert de charge.

9. Procédé selon l'une des revendications précédentes **caractérisé en ce que** le fluorure de terre rare est formé par réaction d'une solution du sel de terre rare dans le méthanol, avec une solution du complexe de transfert de charge, à une température, de préférence, comprise entre 20 et 200 °C.

10. Procédé selon l'une des revendications précédentes **caractérisé en ce que** le sel de terre rare est choisi parmi les chlorures, nitrates et alkoxydes.

11. Procédé selon l'une des revendications précédentes **caractérisé en ce que** le fluorure de terre rare formé est obtenu sous la forme de nanoparticules, éventuellement fonctionnalisées.

12. Procédé selon l'une des revendications précédentes **caractérisé en ce que** le fluorure de terre rare formé est obtenu sous la forme d'une couche venant recouvrir la surface de nanoparticules existantes.

13. Procédé selon l'une des revendications précédentes **caractérisé en ce que** le fluorure de terre rare est sous la forme d'un fluorure mixte ou dopé.

14. Procédé selon l'une des revendications précédentes **caractérisé en ce que** la terre rare est choisie parmi le lanthane, le cérium, le praséodyme, le néodyme, le prométhium, le samarium, l'europium, le gadolinium, le terbium, le dysprosium, l'holmium, l'erbium, le thulium, l'ytterbium, le lutécium, l'yttrium et le scandium.

15. Procédé selon l'une des revendications précédentes **caractérisé en ce qu'**une fonctionnalisation de la surface du fluorure de terre rare obtenu est réalisée avec une molécule organique porteuse d'une fonction biphosphonate.

16. Procédé de préparation d'un xérogel comprenant la préparation d'une suspension colloïdale selon l'une quelconque des revendications 1 à 15, la déstabilisation de ladite suspension colloïdale, notamment avec de l'acétone, et le séchage du précipité résultant.

17. Xérogel obtenu par déstabilisation d'une suspension colloïdale de nanoparticules composées, au moins en partie, d'un fluorure de terre rare, ladite suspension colloïdale étant obtenue selon le procédé défini à l'une des revendications 1 à 15, notamment avec de l'acétone, et séchage du précipité résultant.

## Patentansprüche

1. Verfahren zur Herstellung einer kolloidalen Suspension von Nanopartikeln, die wenigstens teilweise aus einem Seltenerdfluorid bestehen, **dadurch gekennzeichnet, dass** das Fluorid durch Reaktion in Lösung zwischen einem Salz der entsprechenden Seltenen Erde und einem Charge-Transfer-Komplex der Formel (I) erhalten wird: 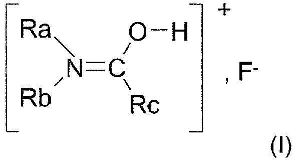 bei der:
- Ra und Rb, die gleich oder verschieden sind, jeweils unabhängig voneinander eine (C₁-C₆)-Alkyl-, (C₃-C₇)-Cycloalkyl-, Phenyl-, Heterocycloalkylgruppe mit 5 oder 6 Kettengliedern darstellen, wobei die Gruppe eventuell substituiert sein kann, oder aber Ra und Rb miteinander verbunden sind und eine Alkylenkette mit 2 bis 6 Kohlenstoffatomen, die eventuell substituiert ist, bilden, und
- Rc ein Wasserstoffatom oder eine (C₁-C₆)-Alkyl-, (C₃-C₇)-Cycloalkyl-, Phenyl-, Heterocycloalkylgruppe mit 5 oder 6 Kettengliedern darstellt, wobei die Gruppe eventuell substituiert sein kann, oder aber Rb und Rc miteinander verbunden sind und eine Alkylenkette mit 2 bis 5 Kohlenstoffatomen, die eventuell substituiert ist, bilden.

2. Verfahren nach Anspruch 1, **dadurch gekennzeichnet, dass** die Reaktion zwischen dem Seltene-Erde-Salz und dem Charge-Transfer-Komplex in einem Lösungsmittel oder einem Lösungsmittelgemisch durchgeführt wird, wobei das verwendete Seltene-Erde-Salz löslich ist.

3. Verfahren nach Anspruch 1 oder 2, **dadurch gekennzeichnet, dass** der Charge-Transfer-Komplex zuvor durch Reaktion von HF und von Dimethylformamid erhalten wird, was zur Bildung eines Charge-Transfer-Komplexes führt, bei dem Ra=Rb=Methyl und Rc=H.

4. Verfahren nach Anspruch 1 oder 2, **dadurch gekennzeichnet, dass** der Charge-Transfer-Komplex zuvor durch Reaktion von HF und von Dimethylacetamid erhalten wird, was zur Bildung eines Charge-Transfer-Komplexes führt, bei dem Ra=Rb=Rc=Methyl.

5. Verfahren nach Anspruch 1 oder 2, **dadurch gekennzeichnet, dass** der Charge-Transfer-Komplex zuvor durch Reaktion von HF und von N-Methylpyrrolidinon erhalten wird, was zur Bildung eines Charge-Transfer-Komplexes führt, bei dem Ra= Methyl und -Rc-Rb-=-(CH₂)₃-.

6. Verfahren nach einem der vorhergehenden Ansprüche, **dadurch gekennzeichnet, dass** die Reaktion zwischen dem Seltene-Erde-Salz und dem Charge-Transfer-Komplex in einem Lösungsmittelgemisch durchgeführt wird, das ein protisches Lösungsmittel enthält.

7. Verfahren nach Anspruch 6, **dadurch gekennzeichnet, dass** das protische Lösungsmittel Methanol, Ethanol oder Isopropanol ist.

8. Verfahren nach einem der vorhergehenden Ansprüche, **dadurch gekennzeichnet, dass** der Charge-Transfer-Komplex zuvor aus einer Lösung von HF und Dimethylformamid, Dimethylacetamid oder N-Methylpyrrolidinon gebildet wird und dass das Dimethylformamid, das Dimethylacetamid oder das N-Methylpyrrolidinon auch die Funktion eines Lösungsmittels für die spätere Reaktion zwischen dem Seltene-Erde-Salz und dem Charge-Transfer-Komplex übernimmt.

9. Verfahren nach einem der vorhergehenden Ansprüche, **dadurch gekennzeichnet, dass** das Seltenerdfluorid durch Reaktion einer Lösung des Seltene-Erde-Salzes in Methanol, mit einer Lösung des Charge-Transfer-Komplexes, bei einer Temperatur, die vorzugsweise zwischen 20 und 200 °C liegt, gebildet wird.

10. Verfahren nach einem der vorhergehenden Ansprüche, **dadurch gekennzeichnet, dass** das Seltene-Erde-Salz aus Chloriden, Nitraten und Alkoxiden ausgewählt ist.

11. Verfahren nach einem der vorhergehenden Ansprüche, **dadurch gekennzeichnet, dass** das gebildete Seltenerdfluorid in Form von Nanopartikeln, die eventuell funktionalisiert sind, erhalten wird.

12. Verfahren nach einem der vorhergehenden Ansprüche, **dadurch gekennzeichnet, dass** das gebildete Seltenerdfluorid in Form einer Schicht, welche die Oberfläche von vorhandenen Nanopartikeln überzieht, erhalten wird.

13. Verfahren nach einem der vorhergehenden Ansprüche, **dadurch gekennzeichnet, dass** das Seltenerdfluorid in Form eines gemischten oder dotierten Fluorids vorliegt.

14. Verfahren nach einem der vorhergehenden Ansprüche, **dadurch gekennzeichnet, dass** die Seltene Erde aus Lanthan, Cer, Praseodym, Neodym, Promethium, Samarium, Europium, Gadolinium, Terbium, Dysprosium , Holmium, Erbium, Thulium, Ytterbium, Lutetium, Yttrium und Scandium ausgewählt ist.

15. Verfahren nach einem der vorhergehenden Ansprüche, **dadurch gekennzeichnet, dass** eine Funktionalisierung der Oberfläche des erhaltenen Seltenerdfluorids mit einem organischen Molekül, das eine Bisphosphonat-Funktion trägt, durchgeführt wird.

16. Verfahren zur Herstellung eines Xerogels, umfassend die Herstellung einer kolloidalen Suspension nach einem der Ansprüche 1 bis 15, die Destabilisierung der kolloidalen Suspension, insbesondere mit Aceton, und das Trocknen des resultierenden Präzipitats.

17. Xerogel, gewonnen durch Destabilisierung einer kolloidalen Suspension von Nanopartikeln, die wenigstens teilweise aus einem Seltenerdfluorid bestehen, wobei die kolloidale Suspension gemäß dem in einem der Ansprüche 1 bis 15 definierten Verfahren erhalten wird, insbesondere mit Aceton, und Trocknen des resultierenden Präzipitats.

## Claims

1. Process for the preparation of a colloidal suspension of nanoparticles composed, at least in part, of a rare earth fluoride, **characterized in that** said fluoride is obtained, by reaction in solution, between the corresponding rare earth salt and from a charge transfer complex of formula (I): 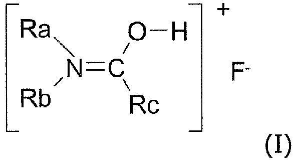 in which:
- Ra and Rb, which are identical or different, represent, each independently of one another, a (C₁-C₆)alkyl, (C₃-C₇)cycloalkyl, phenyl or 5- or 6-membered heterocycloalkyl group, said group being optionally substituted, or else Ra and Rb are linked together to form an optionally substituted alkylene chain comprising from 2 to 6 carbon atoms, and
- Rc represents a hydrogen atom or a (C₁-C₆)alkyl, (C₃-C₇)cycloalkyl, phenyl or 5- or 6-membered heterocycloalkyl group, said group being optionally substituted, or else Rb and Rc are linked together to form an optionally substituted alkylene chain comprising from 2 to 5 carbon atoms.

2. Process as claimed in claim 1, **characterized in that** the reaction between the rare earth salt and the charge transfer complex is carried out in a solvent or a solvent mixture in which the rare earth salt used is soluble.

3. Process as claimed in claim 1 or 2, **characterized in that** the charge transfer complex is obtained beforehand by reaction of HF and dimethylformamide, resulting in the formation of a charge transfer complex in which Ra=Rb=methyl and Rc=H.

4. Process as claimed in claim 1 or 2, **characterized in that** the charge transfer complex is obtained beforehand by reaction of HF and dimethylacetamide, resulting in the formation of a charge transfer complex in which Ra=Rb=Rc=methyl.

5. Process as claimed in claim 1 or 2, **characterized in that** the charge transfer complex is obtained beforehand by reaction of HF and N-methylpyrrolidinone, resulting in the formation of a charge transfer complex in which Ra=methyl and -Rc-Rb-=-(CH₂)₃-.

6. Process as claimed in one of the preceding claims, **characterized in that** the reaction between the rare earth salt and the charge transfer complex is carried out in a solvent mixture comprising a protic solvent.

7. Process as claimed in claim 6, **characterized in that** the protic solvent is methanol, ethanol or isopropanol.

8. Process as claimed in one of the preceding claims, **characterized in that** the charge transfer complex is formed beforehand from a solution of HF and of dimethylformamide, dimethylacetamide or N-methylpyrrolidinone and **in that** the dimethylformamide, the dimethylacetamide or the N-methylpyrrolidinone also acts as solvent for the subsequent reaction between the rare earth salt and the charge transfer complex.

9. Process as claimed in one of the preceding claims, **characterized in that** the rare earth fluoride is formed by reaction of a solution of the rare earth salt in methanol with a solution of the charge transfer complex at a temperature preferably between 20 and 200°C.

10. Process as claimed in one of the preceding claims, **characterized in that** the rare earth salt is chosen from chlorides, nitrates and alkoxides.

11. Process as claimed in one of the preceding claims, **characterized in that** the rare earth fluoride formed is obtained in the form of optionally functionalized nanoparticles.

12. Process as claimed in one of the preceding claims, **characterized in that** the rare earth fluoride formed is obtained in the form of a layer which will cover the surface of existing nanoparticles.

13. Process as claimed in one of the preceding claims, **characterized in that** the rare earth fluoride is in the form of a mixed or doped fluoride.

14. Process as claimed in one of the preceding claims, **characterized in that** the rare earth is chosen from lanthanum, cerium, praseodymium, neodymium, promethium, samarium, europium, gadolinium, terbium, dysprosium, holmium, erbium, thulium, ytterbium, lutetium, yttrium and scandium.

15. Process as claimed in one of the preceding claims, **characterized in that** the surface of the rare earth fluoride obtained is functionalized with an organic molecule carrying a bisphosphonate functional group.

16. Process for the preparation of a xerogel comprising the preparation of a colloidal suspension as claimed in one of claims 1 to 15, the destabilization of said colloidal suspension, in particular with acetone, and drying of the resulting precipitate.

17. Xerogel obtained by destabilization of a colloidal suspension of nanoparticles composed, at least in part, of a rare earth fluoride, said colloidal suspension being obtained according to the process claimed in one of claims 1 to 15 in particular with acetone, and drying the resulting precipitate.
